(19) Europäisches Patentamt European Patent Office Office européen des brevets

(11) **EP 3 339 153 B1**

(12) **EUROPEAN PATENT SPECIFICATION**

(45) Date of publication and mention
of the grant of the patent:
**25.03.2020 Bulletin 2020/13**

(51) Int Cl.:
***B62K 19/32*** *(2006.01)*

(21) Application number: **17208145.7**

(22) Date of filing: **18.12.2017**

(54) **ADJUSTABLE HEADSTOCK ARRANGEMENT**

EINSTELLBARE LENKROHRANORDNUNG

AGENCEMENT AJUSTABLE DE TUBE DE DIRECTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.12.2016 GB 201622199**

(43) Date of publication of application:
**27.06.2018 Bulletin 2018/26**

(73) Proprietor: **Scott & Sargeant (Properties) Ltd
Horsham, West Sussex RH13 5QR (GB)**

(72) Inventor: **Charnaud, Peter
West Sussex, BN42 4TH (GB)**

(74) Representative: **Cameron, Stewart
Cameron Intellectual Property Ltd
Moncrieff House
Floor 4
69 West Nile Street
Glasgow G1 2QB (GB)**

(56) References cited:
**WO-A1-2008/130098     CN-U- 204 871 418
FR-A1- 2 533 523         GB-A- 2 448 926
US-A1- 2006 022 427     US-A1- 2007 222 173
US-A1- 2013 020 777     US-B1- 9 365 255**

**EP 3 339 153 B1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to an adjustable headstock arrangement, particularly but not exclusively, an adjustable headstock arrangement for adjusting a head tube angle relative to the mainframe of a cycle such as a push bicycle or motorcycle.

The head tube angle of a cycle refers to the angle between the steering tube and the mainframe of the cycle (which in turn is directly related to the angle between the steering tube and the ground upon which the cycle rests). It is desirable for a rider to have the facility to alter the head tube angle of a cycle in many scenarios. For example, when a mountain bike rider is cycling downhill it can be desirable for the head tube angle to be "slacker" (more acute relative to the ground). Whereas, in contrast, it can be desirable for the head tube angle to be "steeper" (more obtuse relative to the ground) for uphill riding.

Angled headset arrangements are known and can be fitted to cycles in an effort to provide this facility. One such example is the "Angleset" product provided by Cane Creek Cycling Components, Inc., 355 Cane Creek Road, Fletcher, NC 28732, USA. This product relies upon angled insert cups which are typically retrofitted to the cycle by the user. However, such cup based arrangements require numerous specialist parts, tools and skills during installation and removal. Furthermore, once installed, adjusting the head tube angle provided by such cup based arrangements is a time-consuming maintenance workshop task rather than an "on-ride" task which can easily be undertaken by a rider; this is due to the headstock arrangement requiring to be dismantled, adjusted / replaced and then reassembled.

Such cup-based arrangements are also difficult to adjust correctly since they require a high level of precision and skill. They are therefore somewhat susceptible to mistakes in final alignment which can adversely affect steering and can pose a danger to the rider. Furthermore, the degree of angular adjustment which can be provided by such arrangements is very narrow (in the order of 1 to 3 degrees) due to inherent geometrical restrictions in the arrangements and associated components on which the arrangement is mounted.

It is also known from US2006/022427A1 (Grant Robert W [CA]), which discloses an adjustable headstock arrangement according to the preamble of claim 1, to provide a bracket structure which mounts to the front of a motorcycles's frame, and which permits a degree of relocation of the position of the front wheel steering assembly.

According to the present invention there is provided an adjustable headstock arrangement for adjusting a head tube angle relative to a mainframe of a cycle, the adjustable headstock arrangement comprising:-

    a first headstock member for attachment to the mainframe;

a second headstock member pivotably mounted with respect to the first headstock member such that the head tube angle of the second headstock member may be adjusted between a first head tube angle and a second head tube angle; and wherein the first and second headstock members comprise at least a curvilinear engagement surface which allows the headstock angle of the second headstock member relative to the first headstock member to be adjusted between a maximum headstock angle and a minimum headstock angle and wherein the degree of curvature in the or each curvilinear engagement surface is such that a resultant headstock angle pivot axis is located forward of and perpendicular to a longitudinal axis of the second headstock member.

This curvilinear arrangement has the advantage of allowing continuous adjustment of the first and second headstock members relative to one another such that any angle between a maximum and minimum adjustment angle can be selected by a user. The curvilinear arrangement also has the advantage of providing a compensation in the mainframe height of the cycle resulting from said angular adjustment.

The degree of curvature in the or each curvilinear engagement surface may be such that the resultant headstock angle pivot axis is locatable forward of a front wheel axle of the cycle.

The first headstock arrangement may comprise a pair of curvilinear inner tracks and the second headstock arrangement may comprise a pair of corresponding curvilinear outer tracks which slideably engage with one another.

The first headstock arrangement may comprise a left hand side headstock plate for attachment to a left hand side of a cycle mainframe and a corresponding right hand side headstock plate for attachment to a right-hand side of the cycle mainframe.

The curvilinear arrangement of the second headstock arrangement may comprise a pair of curvilinear bearing surfaces and a pair of curvilinear tracks at either side of the second headstock arrangement.

The curvilinear arrangement of the first headstock arrangement may comprise a pair of curvilinear bearing ends which correspond with the curvilinear bearing surfaces of the second headstock arrangement to provide a flush curvilinear bearing surface, and a pair of curvilinear protrusions which correspond with said pair of curvilinear tracks at either side of the second headstock arrangement to guide the second head stock during its movement between angular positions around said headstock angle pivot axis.

Further features and advantages of the aspects of the present invention will become apparent from the claims and the following description.

Embodiments of the present invention will now be described by way of example only, with reference to the following diagrams, in which:-

Fig. 1 is a transverse illustration of an adjustable headstock arrangement according to the invention, where first and second headstock members are shown disengaged from one another for illustrative purposes;

Fig. 2 is an upper perspective illustration of the adjustable headstock members of Fig. 1;

Fig. 3 is a perspective exploded view of the adjustable headstock members of Fig. 1;

Fig. 4 is a transverse illustration of the adjustable headstock members assembled and attached to a cycle mainframe, steering tube and fork arrangement in a first, relatively steep (obtuse relative to the ground), head tube angle;

Fig. 5 is a transverse illustration of the adjustable headstock of Fig. 4 where the head tube angle has been adjusted to a second, relatively slack (acute relative to the ground) head tube angle;

Figs. 6A, 6B and 6C are schematic illustrations of a push cycle provided with an adjustable headstock arrangement of the present invention where the arrangement is shown in a series of progressively slacker angles;

Figs. 7A, 7B and 7C are more detailed schematic illustrations of the angle changes and resultant mainframe height changes depicted in Figs. 6A, 6B and 6C; and

Fig. 8A and 8B are transverse perspective illustrations of first and second fixed, replaceable headstock members in accordance with an alternative embodiment (not forming part of the present invention).

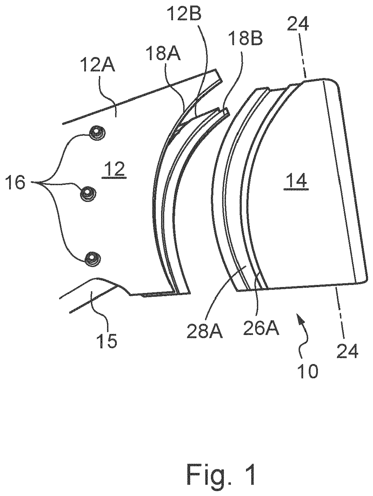

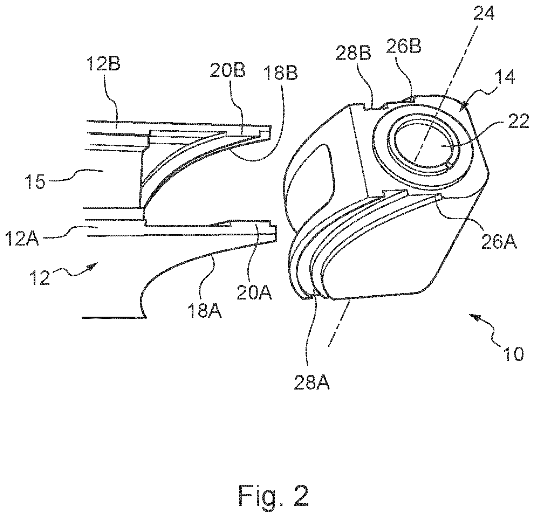

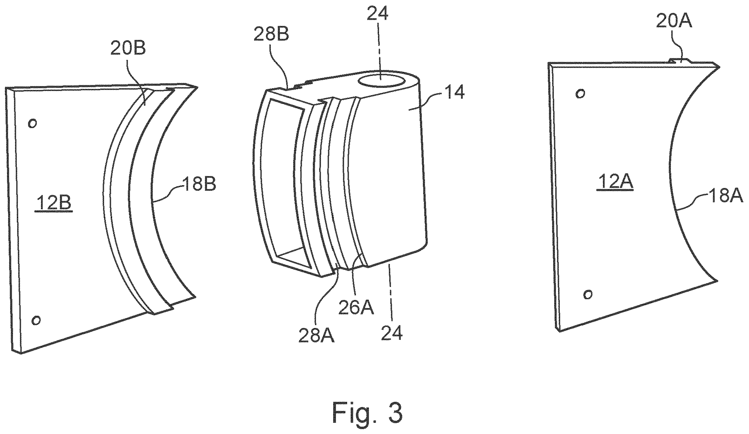

With particular reference to Figs. 1 to 3, an adjustable headstock arrangement, generally designated 10 comprises a first headstock member 12 and a second headstock member 14. The first headstock member 12 comprises a right hand side plate 12A and a left hand side plate 12B attached to a cycle mainframe 15 by way of three attachment rivets / bolts / welds 16 (or any other suitable means of attachment) on either side of the mainframe 15.

The right and left hand side plates 12A, 12B are provided with curvilinear bearing edges 18A, 18B and curvilinear protrusions 20A, 20B the purpose of which will be described subsequently.

The second headstock member 14 has a throughbore 22 having a head tube axis 24 and which is sized to receive a steering tube therein. The second headstock member 14 also comprises curvilinear bearing surfaces 26A, 26B and curvilinear tracks 28A, 28B which are shaped, positioned and dimensioned to correspond with the equivalent bearing surfaces 18A, 18B and curvilinear protrusions 20A, 20B of the first headstock member 12.

Although not shown in the diagrams, a locking mechanism is also provided in order to selectively lock the first and second headstock members 12, 14 in desired angular positions relative to one another and to allow easy unlocking thereof. The locking mechanism may comprise any suitable locking arrangement such as for example a screw arrangement which allows continual adjustment of the angle between the first and second headstock members 12, 14 by progressive turning of the adjustment screw. In order to further facilitate secure locking, one or more quick release locking lever bolts may also be provided between the left and right hand side plates 12A, 12B and within curved slots therethrough such that, when clamped, these will retain the first and second headstock members 12, 14 in the desired angular position.

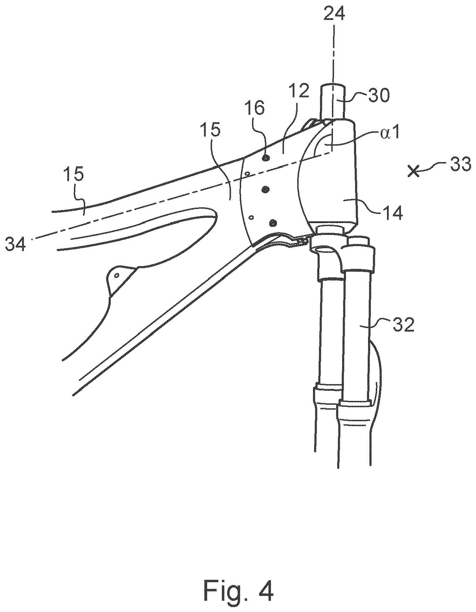

As shown in Fig. 4, in assembly, the first headstock member 12 is attached to a mainframe 15 by a series of rivets / bolts or welds 16 (or any other suitable means of attachment). A steering tube 30 and its associated wheel forks 32 are then installed into the throughbore 22 of the second headstock member 14 using known techniques. The protrusions 20A, 20B of the first headstock member 12 are then aligned with the corresponding tracks 28A, 28B of the second headstock member 14 by the user and the two components engaged with one another by rotating one into engagement with the other such that the protrusions 20A, 20B of the first headstock member are received within and along the corresponding curvilinear tracks 28A, 28B of the second headstock member 14.

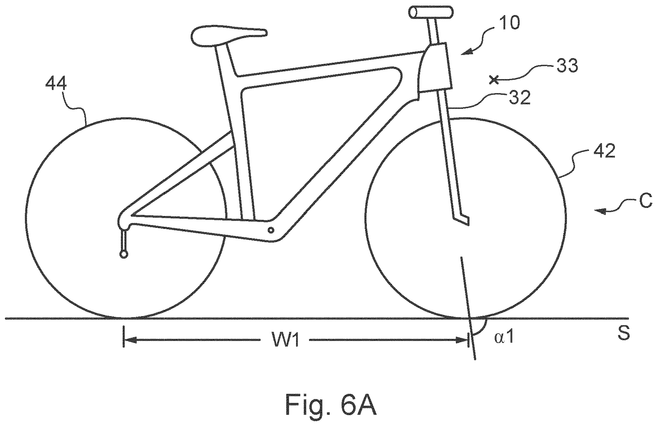

In use, the relative angles of the first and second members 12, 14 may be positioned so as to provide a relatively steep head tube-frame angle $\alpha 1$. The head tube-frame angle being the angle of the head tube axis 24 relative to a top tube longitudinal axis 34. Alternatively, as shown in Fig. 6A, the head tube frame angle $\alpha 1$ may be measured between the longitudinal axis of the forks 32 and the mean ground surface S upon which the front wheels 42 and rear wheels 44 of a cycle C rest. This steep head tube-frame angle $\alpha 1$ may be particularly suited to uphill riding.

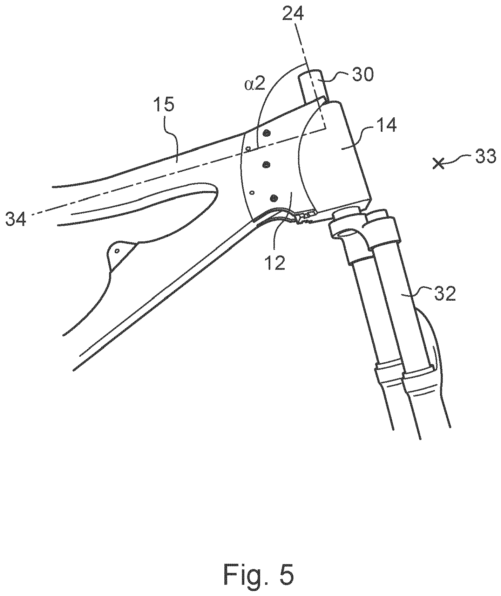

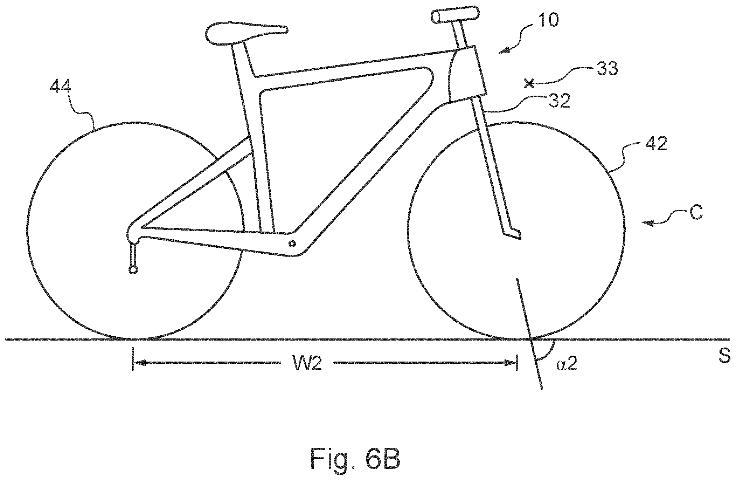

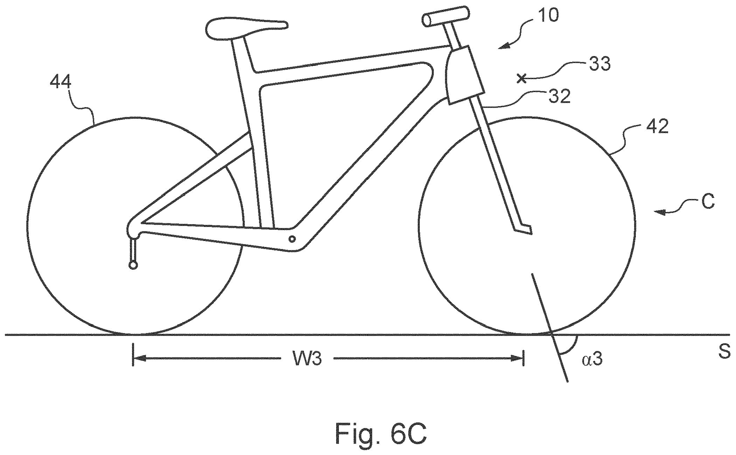

When the rider wishes to change the head tube-frame angle from the steep angle $\alpha 1$ of Fig. 4 he simply unlocks the locking clamps (not shown), rotates the adjustment knob (not shown) in order to progressively rotate the second headstock member 14 relative to the first headstock member around an axis of rotation 33 until the head tube-frame angle assumes a relatively slack angle a2 as shown in Fig. 5 and Fig 6B. Further continued adjustment will arrive at a head tube-frame angle a3 as shown in Fig 6C. The slack head tube-frame angle a2, a3 may be particularly suited to downhill riding. The user then re-clamps the locking clamps in the new angular position.

With reference to Figs. 6A, 6B and 6C slackening of the head tube-frame angles also inherently lengthens the wheelbase from a relatively short dimension W1 to relatively longer dimensions W2, W3 between the front and rear wheels 42, 44; this also improves overall stability and is well suited to downhill riding. In contrast, tightening the head tube-frame angle shortens the wheelbase from a relatively long dimension W3 to relatively shorter dimensions W2, W1; this improves manoeuvrability of the cycle which is well suited to other phases of riding such as uphill riding.

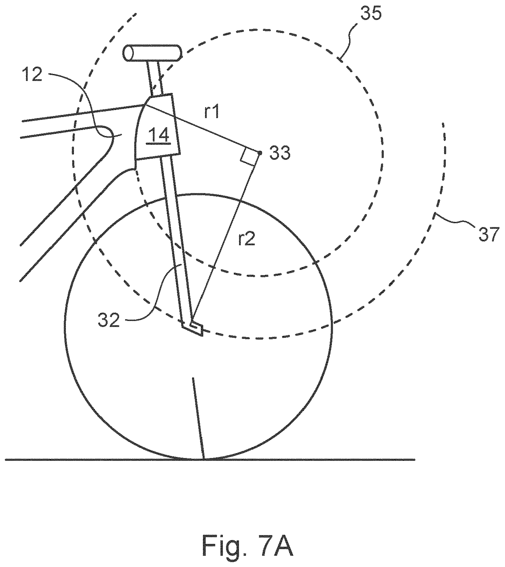

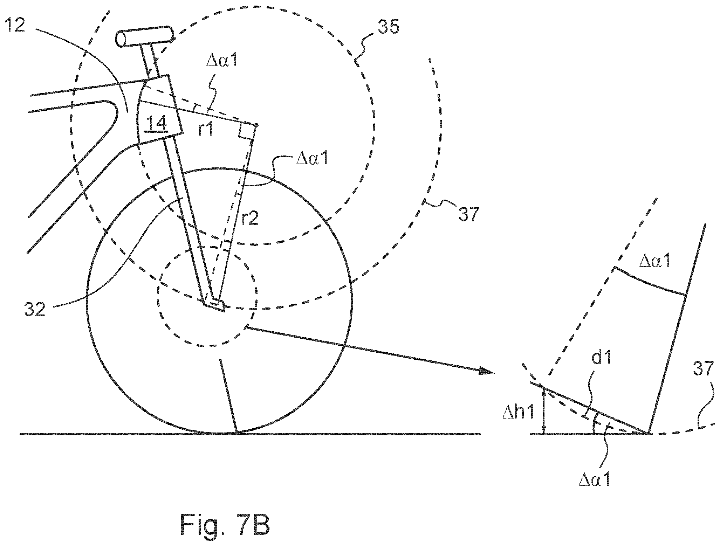

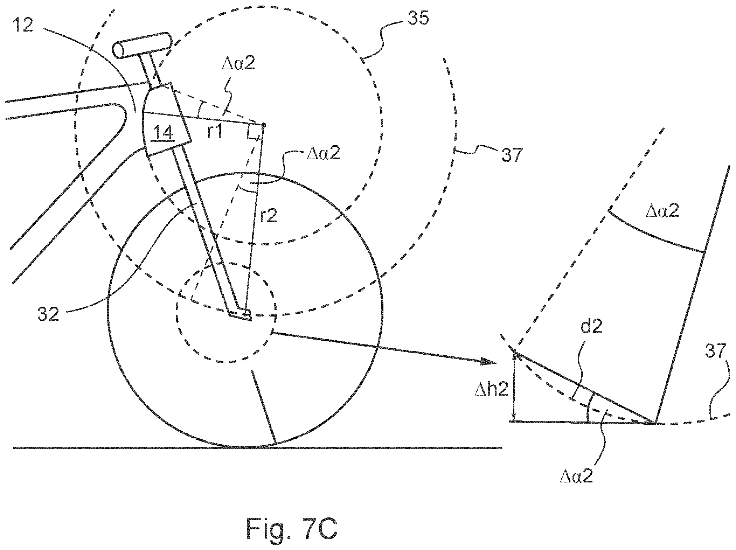

With reference to Figs. 7A, 7B and 7C a first side r1 of a right-angled triangle extends radially from the pivot point 33 such that rotation of that first side around the pivot point causes the end of that side to move along a path depicted by a first arc 35. The length of the first side r1 may be in the region of 10 to 20 cm in the embodiment shown; however, may be varied as desired. A second side r2 of the right-angled triangle extends radially from the pivot point 33 such that rotation of that second side r2 around the pivot point 33 causes the end of that side (which coincides with the ends of forks 32) to move along a path depicted by second arc 37. The length of the second side r2 may be in the region of 20 to 40 cm in the embodiment shown; however, may be varied as desired.

With reference to Fig. 7B, when the second headstock member 14 is rotated relative to the first headstock member 12 through an angle $\Delta\alpha1$ the distal ends of the forks 32 will also move through the same angle by moving a distance d1 along the curve of arc 37. This distance d1 can then be approximated and resolved to the hypotenuse of a triangle which then allows the change in height $\Delta h1$ to be calculated according to the following equation:-

$$\Delta h1 = r2 \, (\sin \Delta\alpha1)^2$$

For example, in an embodiment where r2 is 30cm and $\Delta\alpha1$ is 7 degrees $\Delta h1$ will be 0.45cm.

With reference to Fig. 7C, when the second headstock member 14 is rotated relative to the first headstock member 12 through an angle $\Delta\alpha2$ the ends of the forks 32 will also move through the same angle by moving a distance d2 along the curve of arc 37. For example, in an embodiment where r2 is 30cm and $\Delta\alpha2$ is 14 degrees $\Delta h2$ will be 1.75cm.

In this way, it can be seen that the angular positioning of the headstock members within the quadrant ranging between 270 degrees and 360 degrees on the circle 35 results in minimal $\Delta h$ values for a given $\Delta\alpha$.

Grease or other friction reducing means may be provided between the tracks 28A, 28B and protrusions 20A, 20B and between the bearing surfaces 18A,18B and 26A, 26B in order to facilitate said rotation of the headstock members 12, 14 relative to one another.

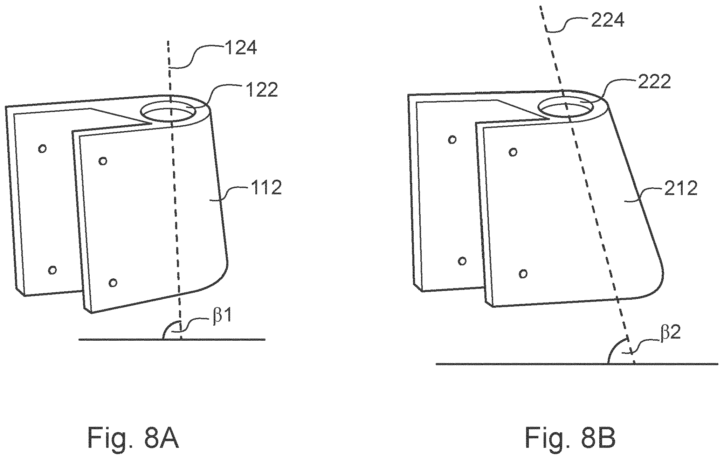

With reference to Fig. 8A in a second embodiment (not forming part of the present invention) a replaceable headstock member 112 may be provided for attachment to a mainframe of a cycle. A throughbore 122 of the replaceable headstock member provides a head-tube angled to provide a head tube axis 124 having a fixed head tube-frame angle β1.

With reference to Fig. 8B (also not forming part of the present invention) a second replaceable headstock member 212 may be provided for attachment to a mainframe of a cycle. A throughbore 222 of the replaceable headstock member provides a head-tube angled to provide a head tube axis 224 having a fixed head tube-frame angle β2 which is slacker than the corresponding angle β1 of the first replaceable headstock member 112.

In use, in accordance with the second aspect of the invention, if a user wishes to change the head tube angle of a cycle they can simply remove the first headstock member 112 and replace it with the second headstock member 212 or alternative headstock members (not shown) having alternative head-tube angles as desired.

Although particular embodiments of the invention have been disclosed herein in detail, this has been done by way of example and for the purposes of illustration only. The aforementioned embodiments are not intended to be limiting with respect to the scope of the appended claims.

It is contemplated by the inventor that various substitutions, alterations, and modifications may be made to the invention without departing from the scope of the invention as defined by the claims. Examples of these include the following:-

In the illustrated embodiments of the invention the term "tube" means any part of a cycle mainframe and the invention is not restricted to use on tubular cycle mainframes. For instance, the invention may be utilised on solid mainframes comprising wooden, or other substrates.

The skilled reader will appreciate that although the particular embodiment of the invention is described in the context of a push bicycle it could equally apply to any two or greater wheeled apparatus where it is useful to be able to adjust the head-tube or equivalent angle.

Rather than the curvilinear surfaces following a circular trajectory 35 instead they may be shaped to follow an elliptical trajectory.

## Claims

1. An adjustable headstock arrangement (10) for adjusting a head tube angle relative to a mainframe of a cycle, the adjustable headstock arrangement comprising:-

    a first headstock member (12) for attachment to the mainframe (15); and
    a second headstock member (14) pivotably mounted with respect to the first headstock member (12) such that the head tube angle of the second headstock member (14) may be adjusted between a first head tube angle and a second head tube angle and wherein the first and second headstock members (12, 14) comprise at least a curvilinear engagement surface (18A, 18B, 20A, 20B, 26A, 26B, 28A, 28B) which allows the headstock angle of the second headstock member (14) relative to the first headstock member (12) to be adjusted between a maximum headstock angle and a minimum headstock angle and

**characterised in that** the degree of curvature in the or each curvilinear engagement surface (18A, 18B, 20A, 20B, 26A, 26B, 28A, 28B) is such that a resultant headstock angle pivot axis (33) is located forward of and perpendicular to a longitudinal axis (24) of the second headstock member (14).

2. An adjustable headstock arrangement according to claim 1, wherein the degree of curvature in the or each curvilinear engagement surface (18A, 18B, 20A, 20B, 26A, 26B, 28A, 28B) is such that the resultant headstock angle pivot axis (33) is locatable in vertical alignment with a front wheel axle of the cycle.

3. An adjustable headstock arrangement according to claim 1, wherein the degree of curvature in the or each curvilinear engagement surface(18A, 18B, 20A, 20B, 26A, 26B, 28A, 28B) is such that the resultant headstock angle pivot axis (33) is locatable forward of a front wheel axle of the cycle.

4. An adjustable headstock arrangement according to any preceding claim, wherein the first headstock member (12) comprises a pair of curvilinear inner tracks (20A, 20B) and wherein the second headstock member (14) comprises a pair of corresponding curvilinear outer tracks (28A, 28B) which slideably engage with one another.

5. An adjustable headstock arrangement according to claim 4, wherein the first headstock member (12) comprises a left hand side headstock plate (12A) for attachment to a left hand side of the cycle mainframe (15) and a corresponding right hand side headstock plate (12B) for attachment to a right-hand side of the cycle mainframe (15).

6. An adjustable headstock arrangement according to any preceding claim, wherein the at least one curvilinear engagement surface of the second headstock member (14) comprises a pair of curvilinear bearing surfaces (26A, 26B) and a pair of curvilinear tracks (28A, 28B) at either side of the second headstock member (14).

7. An adjustable headstock arrangement according to claim 6, wherein the at least one curvilinear engagement surface of the first headstock member (12) comprises a pair of curvilinear bearing ends (18A, 18B) which correspond with the curvilinear bearing surfaces (26A, 26B) of the second headstock member (14) to provide a flush curvilinear bearing surface, and a pair of curvilinear protrusions (20A, 20B) which correspond with said pair of curvilinear tracks (28A, 28B) at either side of the second headstock member (14) to guide the second headstock member (14) during its movement between angular positions around said resultant headstock angle pivot axis (33).

**Patentansprüche**

1. Einstellbare Kopfstückanordnung (10) zum Einstellen eines Steuerrohrwinkels relativ zu einem Hauptrahmen eines Fahrrades, wobei die einstellbare Kopfstückanordnung Folgendes umfasst:

ein erstes Kopfstückelement (12) zum Anbringen an dem Hauptrahmen (15); und;
ein zweites Kopfstückelement (14), das in Bezug auf das erste Kopfstückelement (12) drehbar montiert ist, sodass der Steuerrohrwinkel des zweiten Kopfstückelements (14) zwischen einem ersten Steuerrohrwinkel und einem zweiten Steuerrohrwinkel eingestellt werden kann, und wobei das erste und zweite Kopfstückelement (12, 14) mindestens eine krummlinige Eingriffsoberfläche (18A, 18B, 20A, 20B, 26A, 26B, 28A, 28B) umfassen, die es dem Kopfstückwinkel des zweiten Kopfstückelements (14) erlaubt, relativ zu dem ersten Kopfstückelement (12) zwischen einem maximalen Kopfstückwinkel und einem minimalen Kopfstückwinkel eingestellt zu werden, und
**dadurch gekennzeichnet, dass** der Krümmungsgrad an der oder jeder krummlinigen Eingriffsoberfläche (18A, 18B, 20A, 20B, 26A, 26B, 28A, 28B) dergestalt ist, dass eine resultierende Kopfstückwinkeldrehachse (33) vor der und senkrecht zu einer Längsachse (24) des zweiten Kopfstückelements (14) lokalisiert ist.

2. Einstellbare Kopfstückanordnung nach Anspruch 1, wobei der Krümmungsgrad an der oder jeder krummlinigen Eingriffsoberfläche (18A, 18B, 20A, 20B, 26A, 26B, 28A, 28B) dergestalt ist, dass die resultierende Kopfstückwinkeldrehachse (33) in vertikaler Ausrichtung mit einer Vorderradachse des Fahrrads lokalisierbar ist.

3. Einstellbare Kopfstückanordnung nach Anspruch 1, wobei der Krümmungsgrad an der oder jeder krummlinigen Eingriffsoberfläche (18A, 18B, 20A, 20B, 26A, 26B, 28A, 28B) dergestalt ist, dass die resultierende Kopfstückwinkeldrehachse (33) vor einer Vorderradachse des Fahrrads lokalisierbar ist.

**4.** Einstellbare Kopfstückanordnung nach einem der vorstehenden Ansprüche, wobei das erste Kopfstückelement (12) ein Paar krummliniger innerer Bahnen (20A, 20B) umfasst, und wobei das zweite Kopfstückelement (14) ein Paar entsprechender krummliniger äußerer Bahnen (28A, 28B) umfasst, die gleitend ineinander eingreifen.

**5.** Einstellbare Kopfstückanordnung nach Anspruch 4, wobei das erste Kopfstückelement (12) eine linke Kopfstückplatte (12A) zum Anbringen an eine linke Seite des Fahrradhauptrahmens (15) und eine entsprechende rechte Kopfstückplatte (12B) zum Anbringen an eine rechte Seite des Fahrradhauptrahmens (15) umfasst.

**6.** Einstellbare Kopfstückanordnung nach einem der vorstehenden Ansprüche, wobei die mindestens eine krummlinige Eingriffsoberfläche des zweiten Kopfstückelements (14) ein Paar krummliniger Lageroberflächen (26A, 26B) und ein Paar krummliniger Bahnen (28A, 28B) an jeder Seite des zweiten Kopfstückelements (14) umfasst.

**7.** Einstellbare Kopfstückanordnung nach Anspruch 6, wobei die mindestens eine krummlinige Eingriffsoberfläche des ersten Kopfstückelements (12) ein Paar krummliniger Lagerenden (18A, 18B) umfasst, die den krummlinigen Lageroberflächen (26A, 26B) des zweiten Kopfstückelements (14) entsprechen, um eine krummlinige bündige Lageroberfläche bereitzustellen, und ein Paar krummliniger Vorsprünge (20A, 20B), die dem Paar krummliniger Bahnen (28A, 28B) an jeder Seite des zweiten Kopfstückelements (14) entsprechen, um das zweite Kopfstückelement (14) bei dessen Bewegung zwischen Winkelpositionen um die resultierende Kopfstückwinkeldrehachse (33) herum zu leiten.

**Revendications**

**1.** Agencement de colonne de direction ajustable (10) permettant d'ajuster un angle de tube de tête par rapport à un cadre principal d'un cycle, l'agencement de colonne de direction ajustable comprenant :

un premier organe de colonne de direction (12) destiné à être attaché au cadre principal (15) ; et un second organe de colonne de direction (14) monté de manière à pouvoir pivoter par rapport au premier organe de colonne de direction (12) de sorte que l'angle de tube de tête du second organe de colonne de direction (14) puisse être ajusté entre un premier angle de tube de tête et un second angle de tube de tête et dans lequel les premier et second organes de colonne de direction (12, 14) comprennent au moins une surface de mise en prise curviligne (18A, 18B, 20A, 20B, 26A, 26B, 28A, 28B) permettant à l'angle de colonne de direction du second organe de colonne de direction (14) par rapport au premier organe de colonne de direction (12) d'être ajusté entre un angle de colonne de direction maximal et un angle de colonne de direction minimal, et

**caractérisé en ce que** le degré de courbure de la ou de chaque surface de mise en prise curviligne (18A, 18B, 20A, 20B, 26A, 26B, 28A, 28B) est tel qu'un axe de pivot d'angle de colonne de direction résultant (33) soit situé à l'avant de et perpendiculaire à un axe longitudinal (24) du second organe de colonne de direction (14).

**2.** Agencement de colonne de direction ajustable selon la revendication 1, dans lequel le degré de courbure de la ou de chaque surface de mise en prise curviligne (18A, 18B, 20A, 20B, 26A, 26B, 28A, 28B) est tel que l'axe de pivot d'angle de colonne de direction résultant (33) puisse être situé en alignement vertical avec un essieu de roue avant du cycle.

**3.** Agencement de colonne de direction ajustable selon la revendication 1, dans lequel le degré de courbure de la ou de chaque surface de mise en prise curviligne (18A, 18B, 20A, 20B, 26A, 26B, 28A, 28B) est tel qu'un axe de pivot d'angle de colonne de direction résultant (33) puisse être situé à l'avant d'un essieu de roue avant du cycle.

**4.** Agencement de colonne de direction ajustable selon l'une quelconque des revendications précédentes, dans lequel le premier organe de colonne de direction (12) comprend une paire de rails intérieurs curvilignes (20A, 20B) et dans lequel le second organe de colonne de direction (14) comprend une paire de rails extérieurs curvilignes correspondants (28A, 28B) qui se mettent en prise l'un avec l'autre par coulissement.

**5.** Agencement de colonne de direction ajustable selon la revendication 4, dans lequel le premier organe de colonne de direction (12) comprend une plaque de colonne de direction de côté gauche (12A) destinée à être attachée à un côté gauche du cadre principal de cycle (15) et une plaque de colonne de direction de côté droit correspondante (12B) destinée à être attachée à un côté droit du cadre principal de cycle (15).

**6.** Agencement de colonne de direction ajustable selon l'une quelconque des revendications précédentes, dans lequel l'au moins une surface de mise en prise curviligne du second organe de colonne de direction (14) comprend une paire de surfaces porteuses curvilignes (26A, 26B) et une paire de rails curvilignes (28A, 28B) de chaque côté du second organe de colonne de direction (14).

7. Agencement de colonne de direction ajustable selon la revendication 6, dans lequel l'au moins une surface de mise en prise curviligne du premier organe de colonne de direction (12) comprend une paire d'extrémités porteuses curvilignes (18A, 18B) qui correspondent aux surfaces porteuses curvilignes (26A, 26B) du second organe de colonne de direction (14) pour fournir une surface porteuse curviligne arasée, et une paire de saillies curvilignes (20A, 20B) qui correspondent à ladite paire de rails curvilignes (28A, 28B) de chaque côté du second organe de colonne de direction (14) pour guider le second organe de colonne de direction (14) au cours de son déplacement entre des positions angulaires autour dudit axe de pivot d'angle de colonne de direction résultant (33).

Fig. 1

Fig. 2

Fig. 3

Fig. 4

Fig. 5

Fig. 6A

EP 3 339 153 B1

Fig. 6B

Fig. 6C

EP 3 339 153 B1

Fig. 7A

EP 3 339 153 B1

Fig. 7B

Fig. 7C

EP 3 339 153 B1

Fig. 8B

Fig. 8A

**EP 3 339 153 B1**

**Patent documents cited in the description**

- US 2006022427 A1